# EUROPÄISCHE PATENTSCHRIFT

(11) **EP 1 136 179 B1**
(45) Veröffentlichungstag und Bekanntmachung des Hinweises auf die Patenterteilung: **14.01.2004**
(21) Anmeldenummer: 01250096.3
(22) Anmeldetag: 16.03.2001
(51) Int. Cl.: B23Q 39/04, B23Q 16/06, B23Q 7/14, B23Q 7/02

(54) **Adaptives Werkstück-Spann- und Handlingssystem**
Adaptive workpiece clamping and handling system
Système adaptif pour le serrage et la manipulation de pièces

(30) Priorität: 21.03.2000 DE 10013975
(43) Veröffentlichungstag der Anmeldung: 26.09.2001
(73) Patentinhaber: HOHENSTEIN Vorrichtungsbau und Spannsysteme GmbH, 09337 Hohenstein-Ernstthal (DE)
(72) Erfinder: Franzki, Michael, 78166 Donaueschingen (DE)
(74) Vertreter: Grosse, Ulrich

(56) Entgegenhaltungen:
- DE-A- 3 643 329
- DE-A- 4 320 501
- DE-A- 4 331 166
- DE-U- 8 603 558

## Beschreibung

Die Erfindung geht von dem im Oberbegriff des Patentanspruches 1 definierten Gegenstand aus. Die Bearbeitung von Werkstücken, die in größeren Stückzahlen benötigt werden, erfolgt im allgemeinen auf den Bohr-Fräs-Bearbeitungszentren dadurch kostengünstig, daß die Spannvorrichtungen, die, auf Maschinenpaletten stehend, zum Einsatz kommen, für eine Mehrstückbearbeitung ausgelegt sind. Die Spannvorrichtungen sind dafür durch eine allseitige Nebeneinanderanordnung von Positionier- und Spannmitteln für eine gleichzeitige Spannung einer bestimmten Anzahl gleicher Werkstücke entsprechend ausgestattet Dabei gelingt es häufig, einen großen Anteil des über der Spannpalette im Bearbeitungszentrum zur Verfügung stehenden Arbeitsraumes für Werkstück-Spannmittel und Werkstücke zu nutzen.
Beispielsweise beinhaltet das DE-Patent 4331166 einen Aufspannkörper als Grundkörper einer Spannvorrichtung, der aus senkrechten, dünnwandigen und biegesteifen Platten, in überlappender Verbindung angeordnet oder aus Säulen-Anordnungen strukturiert ist. Vorteilhaft ist, daß der Anteil des für Werkstück-Spannmittel und Werkstücke zur Verfügung stehende Arbeitsraum über der Spannpalette auf 80 bis 90 % erhöht ist.
Bei Nutzung derartig strukturierter Spannvorrichtungen ist in einer Spannlage nur eine Zwei- oder Dreiseitenbearbeitung auf dem Bearbeitungszentrum möglich. Für die Bearbeitung der zwei bis drei anderen Seiten an den Werkstücken ist eine Umspannung der Spannvorrichtung auf der Be- und Entladestation außerhalb des Arbeitsraumes am Bearbeitungszentrum oder eine weitere Spannvorrichtung für diese zusätzliche Spannlage der Werkstücke erforderlich.

Es sind Palettenwechselsysteme bekannt, wobei die Spann- oder Maschinenpaletten, die als Wechselpaletten dem Bearbeitungszentrum zugeführt werden, mit jeweils nur einem Werkstück bestückt sind. Ein derartiges Palettenwechselsystem ist aus dem DE-Patent 3643329 bekannt.

Die Werkstücke auf diesen Spannpaletten müssen aber fertigungsabhängig in separaten, neben und außerhalb der Bearbeitungszentren angeordneten, Servicestationen positioniert, gespannt, kontrolliert, entspannt, entspänt und gesäubert werden.

Nur bei Sondermaschinen ist es bekannt, diese Servicestationen unmittelbar der Bohr- und Fräsfertigung als selbständige Stationsbaugruppen zuzuordnen. Dabei sind aber diese Prozesse neben verschiedenen spanenden Fertigungsstationen in der Sondermaschine und in ihr Werkstückhandling nicht funktionell gekoppelt und anlagenintegriert.

Der im Patentanspruch 1 angegebenen Erfindung liegt das Problem zugrunde, für die Serienfertigung auf universell und flexibel einsetzbaren Bohr- und Fräs-Bearbeitungszentren kleiner Dimensionierung, raumsparend günstig, entspänend Werkstücke mittlerer und großer Dimensionierung in Fünfseitenbearbeitung zu fertigen. Das separierte Werkstück soll, positionsgenau gespannt, durch Verschwenkung allseitig der Werkzeugschneide präsentiert werden können. Diese Fertigungsstation muß mit den die Fertigung vor- und nachbereitenden Servicestationen unmittelbar verbunden sein.

Dieses Problem wird durch die im Patentanspruch 1 aufgeführten Merkmale gelöst.

Die mit der Erfindung erzielbaren Vorteile bestehen insbesondere in einer
- raumsparenden, einfach und kostengünstig ausgebildeten, Einrichtung zum Präsentieren des Werkstückes am Maschinenwerkzeug in günstig entspänender Stellung
- Lage- und Funktions-Koordinierung der Werkstückspannvorrichtungen mit einer Tragevorrichtung, auf der jeweils ein dimensionsoptimiertes Werkstück nicht nur die Station spanender Fertigung, sondern auch die vor- und nachbereitenden Servicestationen raumnah und bedienerfreundlich absolviert
- vereinfachten und für einen automatisierten Ablauf einschließlich automatischer Werkstückzu- und abfuhr geeigneter Baugruppen für Werkstückspannung und Werkstückhandling.

Weitere Ausgestaltungen der Erfindung sind in den Patentansprüchen 2 bis 10 angegeben.

Diese weitergehenden Ausgestaltungen ergänzen die dargestellten Vorteile der erfinderischen Lösung bezüglich einer
- raumsparenden, einfachen Elementeausbildung für die Mittenzentrierung, die Schwenkbeweglichkeit und der Festpositionierung der adaptiven Spannplatte an einer Trägerplatte
- zweckmäßigen Strukturierung der Trägerplatte als multifunktionelle Basisplatte der adaptiven Spannplatte
- leichtgewichtigen Spannpaletten-Strukturierung
- stabilisierenden und drehbeweglichen Ausbildung des aus Spannpaletten gebildeten Tragekörpers
- funktionsoptimierten Anordnung des Tragekörpers am Bohr Fräs-Bearbeitungszentrum
- zweckmäßige Strukturierung der Spannfläche und der Spannmittel für das Werkstück an der adaptiven Spannplatte

Ein Ausführungsbeispiel der Erfindung und deren weitere Ausgestaltung ist in den Figuren dargestellt und wird im Folgenden näher beschrieben:
- Fig. 1: eine Ansicht einer Spannpalette im Mittenschnitt
- Fig. 2: eine Seitenansicht der Spannpalette, von rechts, nach Fig. 1
- Fig. 3 und Fig. 4: eine Ansicht des Trägerkörpers mit Spannpaletten, vereinfacht dargestellt
- Fig. 5: eine Seitenansicht der Tragevorrichtung nach Fig. 3
- Fig. 6: eine Ausschnittdarstellung von Führungsschuh und Führungsschiene
- Fig. 7: eine Ausschnittdarstellung der Mittenzentrierung in der Spannpalette

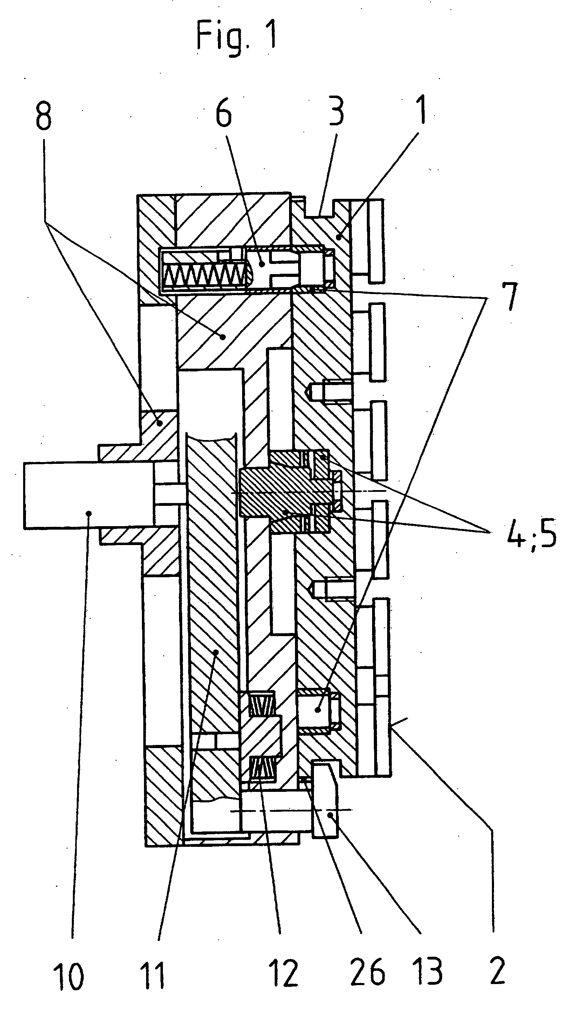

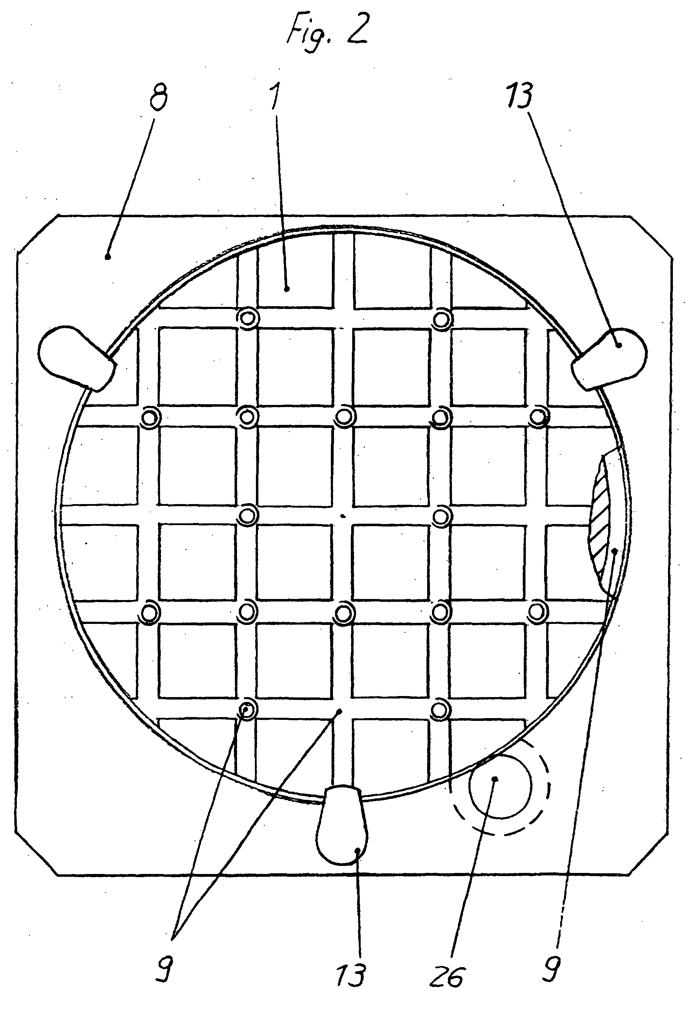

Die in Fig. 1 und Fig. 2 dargestellte Spannpalette besteht im wesentlichen aus einer oberen, oder vorderen, adaptiven Spannplatte 1 und einer unteren, hinteren, Trägerplatte 8, die planflächig miteinander verbunden sind. Die adaptive Spannplatte 1 ist als eine kreisförmige plane Scheibe ausgebildet, an deren Umfang eine Ringnut 3 und, neben der Ringnut, ein Zahnkranz angeordnet ist.

Die adaptive Spannplatte 1 ist in zentrischer Mittenlage, um die auf deren Rückseite eingebrachte federnde Kegelbuchse 4, gegenüber den, in Mittenlage in die Trägerplatte 8 eingebrachten, Kegelbolzen 5, schwenkbeweglich in Teilschritten ver- und einstellbar. Beide Elemente bilden ein axialgerichtet entkoppelbares, zentrisches Mittenpositioniersystem.

Ebenfalls auf der Rückseite der Spannplatte 1 sind in einem Kreisbogen um die Mittenlage, im Abstand von 90° vier Indexbuchsen 7 eingebracht, in die, abhängig von der schwenkbeweglichen Verstellung der Spannplatte 1, ein in der Trägerplatte 8 aufgenommener Richt-/Indexbolzen 6 einrastet.

Die Spannfläche 2 auf der Vorderseite der adaptiven Spannplatte 1 ist beispielsweise mit einem Raster von T-Nuten gleichen Abstands und gleicher Breite für die direkte Positionierung und Spannung eines Werkstückes 8 mittels adaptiver Nuten-Paßsteine, T-Nutensteine und Spannelemente ausgerüstet.

Die untere Trägerplatte 8 der Spannpalette ist als ein Hohlkörper ausgebildet. In dem Hohlkörper ist ein Kraft- und Bewegungs-Übertragungselement 11, mit dem von dem öldruck- und federkraftbetätigten Linearantrieb 10 aus bewegt wird, der Richt-/Indexbolzen 6, die Hub- und Absenkelemente 12, für die während der Schwenkbewegung anzuhebende Spannplatte 1, drei ver- und entriegelbare Klemmhaken 14, in die Ringnut 3 der Spannplatte 1 ragend, und ein motorischer Schwenkantrieb, mit Drehgeber Ober dem Zahnantrieb 20 mit dem Zahnkranz an der Spannplatte 1 verbunden, angeordnet.

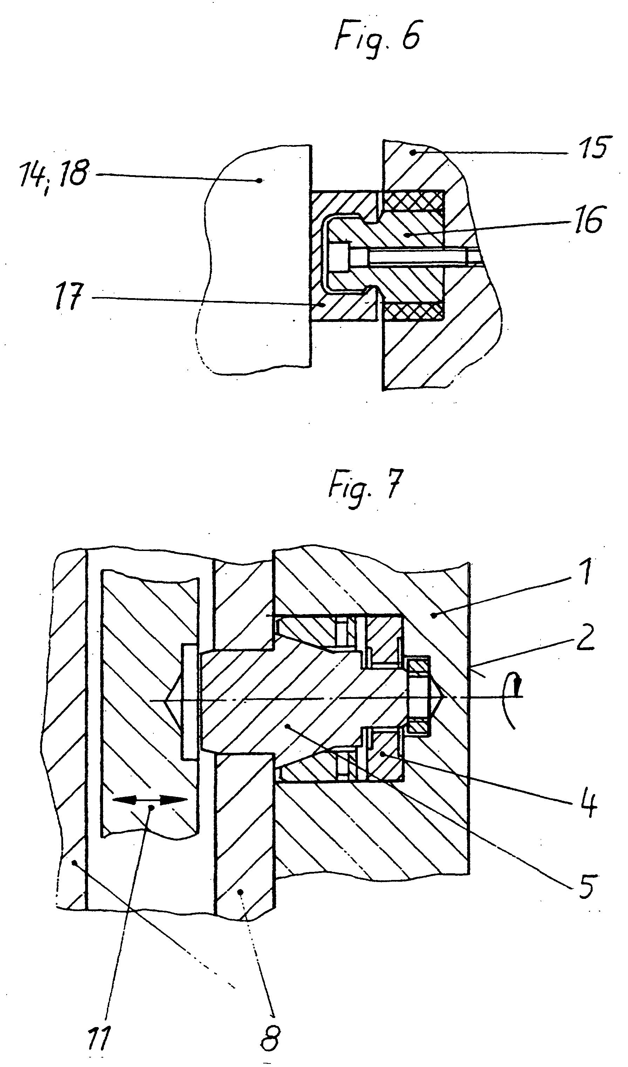

In Fig. 7 ist dargestellt, daß der Kegelbolzen 5 des Mittenpositioniersystems mit einem Lagerzapfen ausgebildet ist. Dieser ist in einer Lagerbohrung der federnden Kegelbuchse geführt.
Durch Betätigung der Hub- und Absenkelemente 12 erfolgt ein Anheben der Spannplatte 1 von der Trägerplatte 8 und ein axialgerichtetes Entkoppeln des Mittenpositioniersystems, womit die Schwenkbewegung der Spannplatte 1 einstell- und bestimmbar ist.

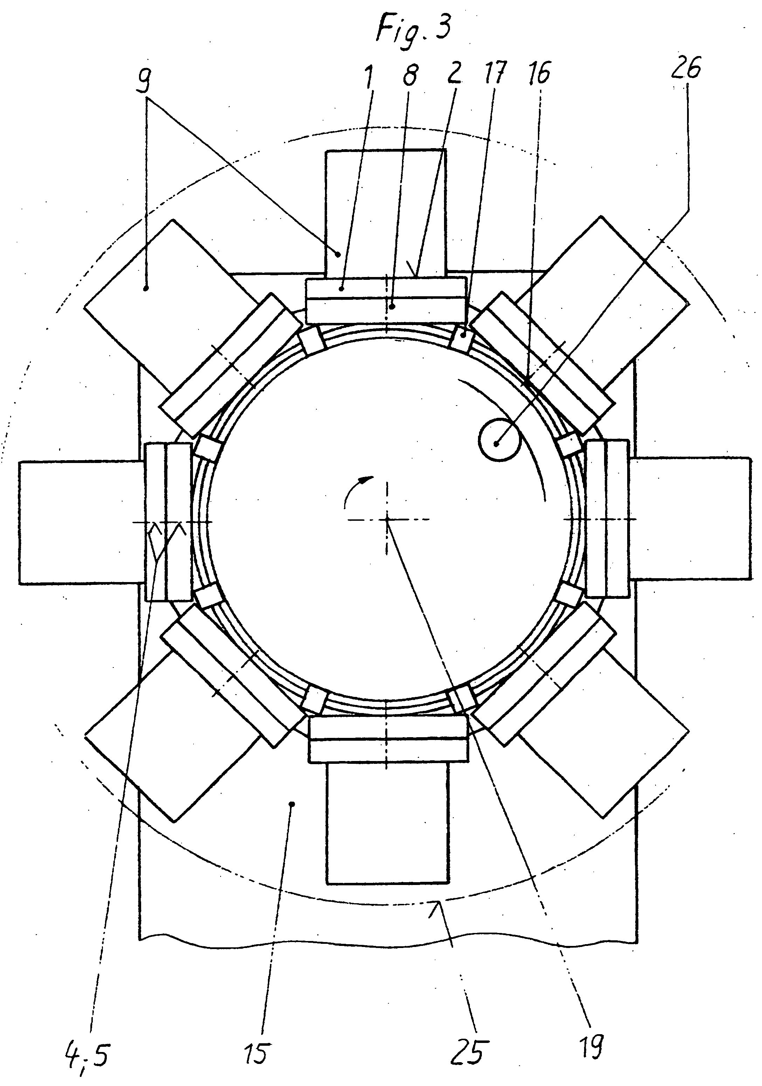

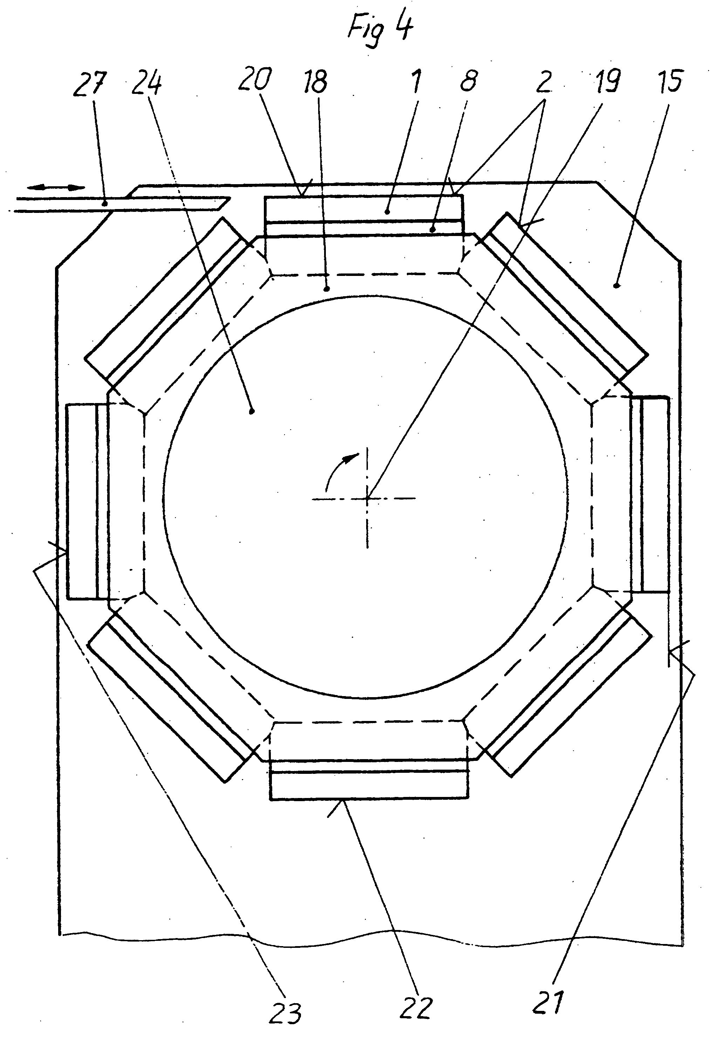

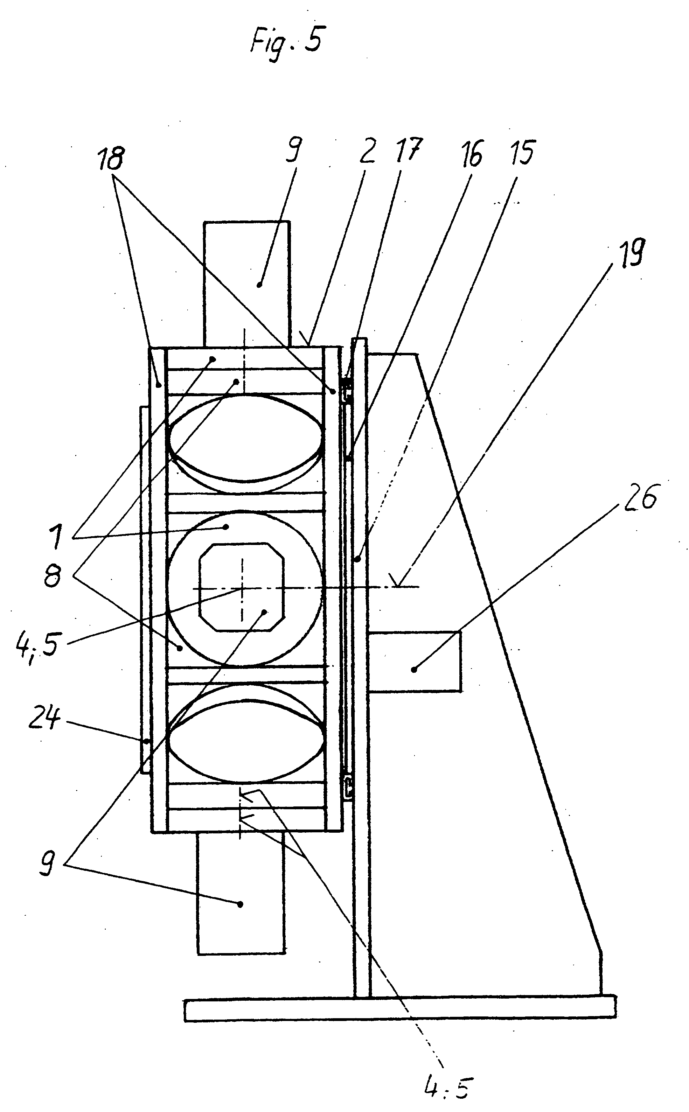

In den Figuren 3, 4 und 5 ist die Vorrichtung für das Zuführen und Präsentieren der mit je einem Werkstück beladenen und bespannten Spannpaletten dargestellt. Acht Spannpaletten, am Umfang mit der Spannfläche 2 nach außen gerichtet, bilden in einer endlosen Reihe, stimseitig flach aneinanderliegend und miteinander verbunden, den achteckigen hohlen Tragekörper 14. Der Tragekörper 14 ist, um die waagerecht virtuelle Achse 19, in Teilschritten schwenkbeweglich einseitig gelagert, mit einer Stirnseite mit der Tragewand 15 verbunden, am Ständer des Bohr-Fräs-Bearbeitungszentrums, nicht dargestellt, angeflanscht. In der zum Werkzeug des Bohr-Fräs-Bearbeitungszentrums gerichteten senkrechten Mittenstellung am Tragekörper 14 ist die Servicestation Fertigung 21. Die Servicestation 20, Werkstückbeladung, Werkstückspannung, Kontrolle des Spannzustandes, Werkstückentspannung und -entladung, befindet sich in der oberen waagerechten Stellung der Spannpalette am Tragekörper 14, in Drehrichtung des Drehantriebes 26 vor der Servicestation 21. Die Steuerung der Tragevorrichtung, insbesondere der Funktionsablauf auf der Servicestation 20, ist koordiniert mit der nicht näher dargestellten automatischen Werkstückzuführeinrichtung 27. Gegenüber der Servicestation 21, Fertigung, befindet sich in senkrechter Mittelstellung der Spannpalette am Tragekörper 14 die Servicestation 23, Verschwenkung des Werkstückes 9 in eine weitere der insgesamt vier Bearbeitungsstellungen. In der unteren waagerechten Stellung der Spannpalette am Tragekörper 14 befindet sich die Servicestation 22, Reinigung und Entspänung von Spannpalette und Werkstück. Nicht dargestellt sind die für die Servicestationen benötigten, Armaturen, Halterungen und Positionieranschläge, die an der Tragewand 15 angeordnet oder-gehaltert sind.

Die stimseitige Anordnung und Verbindung der Spannpaletten am Tragekörper 14 ist durch zwei, stirnseitig anliegend, befestigten Trageringe 18 stabilisiert.

Die virtuelle Achse 19 des in Teilschritten schwenkbeweglich positionierbaren Tragekörpers 14 ist als an der senkrechten Tragewand 15 angeordnete kreisförmig umlaufende Führungsschiene 16 auf der, den Stimseiten der Spannpaletten zugewandten, Führungsschuhe 17 abrollen, ausgebildet.

Über den Tragering 18, der dem Tragekörper 14 zugeordnet und an dem ein Innen-Zahnkranz angebracht ist, und Ober ein Zahnrad, welches Teil des an der Tragewand 15 angeordneten Zahnradantriebes 26 ist, ist der Tragekörper 14 von einem motorischen Schwenk-Antrieb aus, im Kreisbogen entlang der Führungsschiene 16, bewegbar.
Nach Fig. 6 ist die kreisförmig umlaufende Führungsschiene 16 in ein breiter dimensionierten Ringnut, an der Tragewand 15 anliegend, positioniert, verschraubt und an den Ringflächen mit Kleber vergossen.

### Bezugszeichenliste

- 1: Obere adaptive Spannplatte der Spannpalette
- 2: Spannfläche
- 3: Ringnut
- 4: federnde Kegelbuchse
- 5: Kegelbolzen
- 6: Richt-/Indexbolzen
- 7: Indexbuchsen
- 8: untere Trägerplatte der Spannpalette
- 9: Werkstück
- 10: Linearantrieb
- 11: Kraft- und Bewegungsübertragungselement
- 12: Hub- und Absenkelemente
- 13: Klemmhaken
- 14: Tragekörper
- 15: Tragewand
- 16: Führungsschiene
- 17: Führungsschuhe
- 18: Tragringe des Tragekörpers
- 19: virtuelle Achse des Tragekörpers
- 20: Servicestation
- 21: Servicestation
- 22: Servicestation
- 23: Servicestation
- 24: Abdeckung
- 25: Schwenkkreis
- 26: Zahnradantrieb
- 27: automatische Werkstückzuführ-Einrichtung

## Patentansprüche

1. Adaptives Werkstück-Spann- und Handlingssystem zum Zuführen und Präsentieren von, auf adaptiven und schwenkachsbeweglichen Vorrichtungen, gespannten Werkstücken (9) für die Fertigung in Bohr- und Fräs-Bearbeitungszentren, wobei fertigungsvor- und nachbereitende Service-stationen (20-23) integriert sind,
**dadurch gekennzeichnet,**
**daß** Spannvorrichtungen, auf deren Spannflächen (2) in Mittenlage je ein Werkstück (9) gespannt ist, im wesentlichen aus einer Spannpalette bestehen, wobei eine obere adaptive Spannplatte (1) um eine Mittenachse beliebig gerichtete, gegenüber einer unteren Trägerplatte (8) schwenkbeweglich, in Teilschritten positionierbar, ausgebildet ist, und
**daß** eine bestimmte Anzahl Spannpaletten, in endloser Reihe stirnseitig aneinanderliegend, die Spannflächen (2) umfänglich nach außen gerichtet und einem vieleckigen hohlen Tragekörper (14) bildend, miteinander verbunden sind und einseitig, um eine waagerechte virtuelle Achse schwenkbeweglich, in Teilschritten positionierbar, an einer senkrechten Tragewand (15) fest angeordnet sind,
wobei die virtuale Achse (19) als an einer Tragewand (15) kreisförmig umlaufende Führungsschiene (16) auf der, an der Tragewand (15) zugewandten, Stirnseiten der Spannpaletten angeordneten Führungsschuhe (17) abrollen und
die Schwenkbewegungs-Mittenachsen der adaptiven Spannpalette (1) in der Bearbeitungsstellung und des Tragekörpers (14) für Spannpaletten waagerecht lagekoordiniert zueinander in Abhängigkeit zur Werkzeugachse des Bearbeitungszentrums angeordnet sind, und
**daß** stellungsabhängig am Tragekörper (14) in der oberen, in waagerechter Stellung der Spannpaletten, koordiniert mit einer automatischen Werkstückzuführeinrichtung (27) die Servicestation (20), Werkstückbe- und entladung, Werkstückspannung und -entspannung sowie Kontrolle des Spannzustandes in der mittleren, senkrechten, zum Werkzeug gerichteten, Stellung der Spannpaletten die Servicestation Fertigung (21), in der unteren, waagerechten, Stellung der Spannpaletten die Servicestation (23), Schwenkung des Werkstückes in eine weitere Bearbeitungsstellung, zugeordnet sind und
die Armaturen, Halterungen und Positionieranschläge an der Tragewand (15) angeordnet sind.

2. Adaptives Werkstückspann- und Handlingssystem nach Patentanspruch 1,
**dadurch gekennzeichnet,**
**daß** die
obere adaptive Spannplatte (1) der Spannpalette als eine kreisförmige Scheibe ausgebildet ist, an deren rückseitiger Kontaktfläche eine federnde Kegelbuchse (4) in der Mittenlage und in den Winkelstellungen in einem Kreisbogen um die Mittenlage mehrere Indexbuchsen (7) für einen Richt-/Indexbolzen (6) und auf der vorderseitigen Spannfläche (2) Öffnungen für. Befestigungs- und Positionierelemente des Werkstückes (9) angeordnet sind.

3. Adaptives Werkstückspann- und Handlingssystem nach Patentanspruch 1,
**dadurch gekennzeichnet.**
**daß** die
untere Trägerplatte (8) der Spannpalette als ein Hohlkörper ausgebildet ist, an dem der öldruckund/oder federkraftbetätigte Linearantrieb (10) ein Kraft- und Bewegungsübertragungselement (11), ein Kegelbolzen (5), in Mittenlage linear angetriebene Richt-/Indexbolzen (6) und die Hub- und Absenkelemente (12) für die adaptive Spannplatte (1) angeordnet, und
an der Trägerplatte (8), die in die Ringnut (3) der Spannplatte (1) ragend, diese ver-und entriegelnde Klemmhaken (13) aufgenommen sind.

4. Adaptives Werkstück-Spann- und Handlingssystem nach Patentanspruch 1,
**dadurch gekennzeichnet,**
**daß** die obere adaptive Spannplatte (1) der Spannpalette und der Tragekörper (14), mit den Spannpaletten mittels Zahnradtriebes (26), von motorischen Schwenk-Antrieben mit Drehgebern aus betätigt, schwenkbeweglich ausgebildet sind.

5. Adaptives Werkstück-Spann- und Handlingssystem nach Patentanspruch 1,
**dadurch gekennzeichnet,**
**daß** die obere adaptive Spannplatte (1) eine Verbundscheibe, aus einem unteren, einem Zahnkranz des zahnradtriebtragenden Stahl-Teil und einem oberen Leichtmetall-Teil, auf dessen Spannfläche (2) Leicht-Werkstücke positioniert und gespannt sind, bestehend, ist.

6. Adaptives Werkstück-Spann- und Handlingssystem nach Patentanspruch 1,
**dadurch gekennzeichnet,**
**daß** die, einen vieleckigen hohen Tragkörper (14) bildende, endlose Reihe aneinander liegender Spannpaletten an beiden Stirnseiten mit Tragringen (18) miteinander verbunden sind.

7. Adaptives Werkstück-Spann- und Handlingssystem nach Patentanspruch 1,
**dadurch gekennzeichnet,**
**daß** die senkrechte Tragewand (15) lageabhängig zum Maschinen-Werkzeug am Ständer des Bearbeitungszentrums angeflanscht oder als Teil eines Gestells mit Bodenplatte ausgebildet ist.

8. Adaptives Werkstück-Spann- und Handlingssystem nach Patentanspruch 1,
**dadurch gekennzeichnet,**
**daß** die kreisförmig umlaufende Führungsschiene (16) in einer breiter dimensionierten Ringnut der Tragewand (15) einliegend positioniert, verschraubt und an den Ringflachen mit Kleber vergossen ist.

9. Adaptives Werkstück-Spann- und Handlingssystem nach Patentanspruch 1,
**dadurch gekennzeichnet,**
**daß** die Spannfläche (2) der oberen adaptiven Spannplatte (1) der Spannpalette mit einem Raster von T-Nuten gleichen Abstands und gleicher Breite oder mit öldruck- und/oder federkraftbetätigten Spannelementen ausgestattet ist.

10. Adaptives Werkstück-Spann- und Handlingssystem nach Patentanspruch 1,
**dadurch gekennzeichnet,**
**daß** die Öffnungen des hohlen Tragekörpers (14) und der Servicestationen späneabweisend mit einer Abdeckung (24) verschlossen sind.

## Claims

1. Adaptive workpiece clamping and handling system for feeding and presenting of workpieces (9) being clamped on adaptive, swivel motion fixtures for machining in boring and milling machining centres where upstream and downstream stations (20-23) are integrated,
**characterised in**
**that** clamping fixtures, on the mounting areas (2) of which is clamped one workpiece (9) each in centre position, essentially consist of a clamping pallet, where an upper, adaptive clamping plate (1) oriented in a position whatever through a centre axis is designed as to be positioned in partial steps by swivel motion, with regard to a lower, supporting plate (8), and
**that** a determined number of clamping pallets being arranged in an endless row close together at their front face, with the mounting areas (2) on their circumference turned outwards and forming a polygonal, hollow supporting body (14), are joined together and are solidly arranged on a vertical supporting wall (15) as to be moveable by swivel motion at one side through a horizontal, virtual axis and positioned in partial steps,
where virtual axis (19) is designed as circular, continuous guide rail (16) arranged on a supporting wall (15) on which are sliding guide shoes (17) arranged on the clamping pallets front faces oriented to the supporting wall (15), and
the swivel motion's centre axes of the adaptive clamping plate (1) in machining position and of the supporting body (14) for clamping pallets are arranged each other in horizontal, co-ordinated position, depending on the tool axis of the machining centre, and
**that**, depending on the position on supporting body (14), service station (20), Workpiece loading and unloading, Workpiece clamping and unclamping as well as Clamped state check are assigned to the upper, horizontal position of clamping pallets, co-ordinated with an automatic workpiece feeder (27), service station Production (21) is assigned to the centre, vertical position of the clamping pallets, oriented to the tool, and service station (23) Workpiece swivelling into another machining station is assigned to the lower, horizontal position of the clamping pallets, and
**that** fittings, holders and position stops are arranged on supporting wall (15).

2. Adaptive workpiece clamping and handling system as per patent claim 1,
**characterised in,**
**that** the
upper, adaptive clamping plate (1) of clamping pallet is designed as circular disk on the rear contact face of which is arranged in centre position a flexibly-mounted taper sleeve (4) and in the angular positions in a circle arc through centre position are various index bushes (7) for a referencing / indexing bolt (6) and that there are openings for fastening and positioning elements of the workpiece (9) on the front-sided mounting area (2).

3. Adaptive workpiece clamping and handling system as per patent claim 1,
**characterised in,**
**that** the
lower supporting plate (8) of the clamping pallet is designed as hollow body where are arranged the oil-pressure and/or spring-force actuated linear drive 10, a force and motion transmission element (11), a cone stud (5), referencing / indexing bolt 6 linear driven in centre position and the lifting and lowering elements (12) for the adaptive clamping plate (1), and
**that** locking cramps (13) projecting into the clamping plate's (1) annular groove (3) are received at the supporting plate (8), and thus, locking and unlocking said supporting plate.

4. Adaptive workpiece clamping and handling system as per patent claim 1,
**characterised in,**
**that** the upper, adaptive clamping plate (1) of clamping pallet and the supporting body (14) with the clamping pallets is designed as to be moveable by swivel motion by means of a gear drive (26), actuated from motorised swivel drives with shaft encoders.

5. Adaptive workpiece clamping and handling system as per patent claim 1,
**characterised in,**
**that** the upper, adaptive clamping plate (1) is a compound disk consisting of a lower, ring gear of the gear drive-carrying steel element and an upper, light-metal element, on the mounting area (2) of which light-weight workpieces are positioned and clamped.

6. Adaptive workpiece clamping and handling system as per patent claim 1,
**characterised in,**
**that** endless row of dose-together-arranged clamping pallets forming a polygonal, hollow supporting body (14) are joined together on both front faces by means of collar sets (18).

7. Adaptive workpiece clamping and handling system as per patent claim 1,
**characterised in,**
**that** the vertical supporting wall (15) is flanged at the machining centre's column, depending on the position to the machine's tool, or is designed as part of a frame with baseplate.

8. Adaptive workpiece clamping and handling system as per patent claim 1,
**characterised in,**
**that** the continuous, circular guide rail (16) is positioned, screwed and sealed with glue at the ring surfaces in a larger-dimensioned, annular groove bearing against supporting wall (15).

9. Adaptive workpiece clamping and handling system as per patent claim 1,
**characterised in,**
**that** mounting area (2) of the upper, adaptive clamping plate (1) of the clamping pallet is equipped with an equidistant T-slot grid of the same width or with oil-pressure and / or spring-force actuated clamping elements.

10. Adaptive workpiece clamping and handling system as per patent claim 1,
**characterised in,**
**that** the openings of the hollow supporting body (14) and of the service stations are closed by a cover (24) as to build a guard for chips.

## Revendications

1. Système adaptatif de serrage et de maniement de pièces pour alimenter et présenter des pièces (9) serrées sur des dispositifs adaptatifs et déplaçables dans l'axe de pivotement pour un usinage dans des centres d'usinage d'alésage et de fraisage, incorporant des stations de service de préparation de la production et de traitement postérieur (20 - 23),
**caractérisé par le fait**
**que** les dispositifs prise de pièce sur les surfaces de bridage (2) desquels est serrée une pièce (9) chacune en position du milieu, sont composés essentiellement d'une palette de montage, où une plaque de serrage adaptative supérieure (1) orientée de façon quelconque autour d'un axe central est formée de façon à permettre un mouvement de pivotement, dans des pas individuels, par rapport à une plaque porteuse inférieure (8), et
**qu'**un nombre déterminé de palettes de montage, arrangées l'une à côté de l'autre par leurs faces frontales dans une rangée sans fin, ayant les surfaces de bridage (2) orientées vers l'extérieur à leur circonférence et formant ainsi un corps porteur (14) polygonal creux, sont unies l'une avec l'autre et arrangées solidement sur une paroi porteuse verticale (15) de façon à permettre un mouvement de pivotement sur un côté autour d'un axe virtuel horizontal, positionnable dans des pas individuels,
où l'axe virtuel (19) est arrangé en tant que glissière de guidage (16) circulant en forme de cercle sur une paroi porteuse (15), sur laquelle glissent les patins de guidage (17) étant arrangés aux faces frontales des palettes de montage orientées à la paroi porteuse (15), et
où les axes du milieu du mouvement de pivotement de la plaque de serrage adaptative (1) étant en position d'usinage et du corps porteur (14) pour les palettes de montage sont arrangés en position horizontale coordonnée l'une par rapport à l'autre, en fonction de l'axe de l'outil du centre d'usinage, et
**que** la station de service (20), Chargement et déchargement de pièces, Serrage et desserrage de pièces ainsi que Contrôle de l'état serré, est afférée, en fonction de la position sur le corps porteur (14), à la position horizontale supérieure des palettes de montage, en coordination avec un dispositif d'alimentation automatique de pièces (27), et que la station de service Production (21) est afférée à la position verticale du milieu, orientée vers l'outil des palettes de montage, et la station de service (23), Pivotement de la pièce à une autre position d'usinage, est afférée à la position horizontale inférieure des palettes de montage, et que
la tuyauterie, les supports et les butées de positionnement sont arrangés sur ou appuyés par la paroi porteuse (15).

2. Système adaptatif de serrage et de maniement de pièces conformément à la revendication 1,
**caractérisé par le fait**
**que** la plaque de serrage adaptative supérieure (1) de la palette de montage est formée en tant que plateau circulaire, ayant sur sa surface de contact arrière une douille conique (4) montée sur ressorts en position du milieu et dans les positions angulaires dans une trajectoire en forme d'arc autour de la position du milieu plusieurs douilles d'indexage (7) pour un boulon de repérage / d'indexage (6) et ayant sur la surface de bridage (2) du front des ouvertures pour les éléments de fixation et de positionnement de l'outil (9).

3. Système adaptatif de serrage et de maniement de pièces conformément à la revendication 1,
**caractérisé par le fait**
**que** la plaque porteuse inférieure (8) de la palette de montage est formée en tant que corps creux sur lequel sont arrangés l'entraînement linéaire (10) actionné par pression de l'huile et/ou par action d'un ressort, un élément de transmission de la force et du mouvement (11), un boulon conique (5), les boulons de repérage / d'indexage (6) entraînés de façon linéaire en position du milieu, et les éléments de levée et descente (12) pour la plaque de serrage adaptative (1), et
**que** des crochets de serrage (13) sont reçus sur la plaque porteuse (8) de façon à entrer dans la rainure annulaire (3) de la plaque de serrage (1 ), verrouillant et déverrouillant cette dernière.

4. Système adaptatif de serrage et de maniement de pièces conformément à la revendication 1,
**caractérisé par le fait**
**que** la plaque de serrage adaptative supérieure (1) de la palette de montage et le corps porteur (14) avec les palettes de montage, actionné à l'aide d'une commande par engrenage (26) à partir d'un entraînement motorisés de pivotement avec encodeur, sont conçus de façon à permettre un mouvement de pivotement.

5. Système adaptatif de serrage et de maniement de pièces conformément à la revendication 1,
**caractérisé par le fait**
**que** la plaque de serrage adaptative supérieure (1) est un plateau composé d'un élément inférieur, une couronne dentée d'un élément en acier portant la commande par engrenage, et d'un élément supérieur en métal léger, sur la surface de bridage (2) duquel sont positionnées et serrées des pièces légères.

6. Système adaptatif de serrage et de maniement de pièces conformément à la revendication 1,
**caractérisé par le fait**
**que** les palettes de montage arrangées l'une à côté de l'autre de sorte à former une rangée sans fin et formant un corps porteur (14) polygonal élevé, sont unies l'une avec l'autre aux deux côtés frontaux par des anneaux porteurs (18).

7. Système adaptatif de serrage et de maniement de pièces conformément à la revendication 1,
**caractérisé par le fait**
**que** la paroi porteuse verticale (15) est bridée au montant du centre d'usinage ou conçue en tant que partie intégrante d'un montant avec plaque de base, en fonction de la position par rapport à l'outil de la machine.

8. Système adaptatif de serrage et de maniement de pièces conformément à la revendication 1,
**caractérisé par le fait**
**que** la glissière de guidage circulant en forme de cercle (16) est positionnée, vissée et collée avec de la colle aux surfaces annulaires dans une rainure annulaire dimensionnée plus large prévue sur la paroi porteuse (16).

9. Système adaptatif de serrage et de maniement de pièces conformément à la revendication 1,
**caractérisé par le fait**
**que** la surface de bridage (2) de la plaque de serrage adaptative supérieure (1 ) de la palette de montage dispose d'un réseau de rainures en T équidistantes et de la même largeur ou d'éléments de serrage actionnés par pression d'huile et/ou par action d'un ressort.

10. Système adaptatif de serrage et de maniement de pièces conformément à la revendication 1,
**caractérisé par le fait**
**que** les ouvertures du corps porteur creux (14) et des stations de service sont fermées d'une couverture (24) de façon à éviter le dépôt de copeaux.
